# EUROPÄISCHE PATENTSCHRIFT

(11) **EP 2 818 272 B1**
(45) Veröffentlichungstag und Bekanntmachung des Hinweises auf die Patenterteilung: **26.12.2018**
(21) Anmeldenummer: 13174330.4
(22) Anmeldetag: 28.06.2013
(51) Int. Cl.: B23K 26/24, B23K 26/60, B23K 15/00, B23K 31/00, B23K 28/02

(54) **Schweissverfahren zur Vermeidung von Rissen**
Welding method to prevent weld cracking
Procédé de soudage évitant des fissures

(43) Veröffentlichungstag der Anmeldung: 31.12.2014
(73) Patentinhaber: TI Automotive (Heidelberg) GmbH, 69123 Heidelberg (DE)
(72) Erfinder: Hersel, Walter, 71229 Leonberg (DE)
(74) Vertreter: Rohmann, Michael

(56) Entgegenhaltungen:
- EP-A1- 1 176 218
- DE-A1- 2 346 872
- DE-A1- 10 157 403
- DE-B3-102008 059 419
- JP-A- S6 192 792
- US-A1- 2011 020 127

## Beschreibung

Die Erfindung betrifft ein Verfahren, insbesondere Heftschweißverfahren, zum Verbinden zweier Bauteile.

Aus der EP 1 176 218 A1 ist ein Schweißverfahren bekannt zum Verbinden zweier Bauteile, wobei die miteinander zu verbindenden Bereiche der beiden Bauteile mit zumindest einem ersten Energiestrahl jeweils erwärmt und jeweils teilweise aufgeschmolzen werden, wobei die teilweise aufgeschmolzenen Bereiche der beiden Bauteile unter Ausbildung einer Schweißnaht miteinander verbunden werden und wobei ein weiterer Energiestrahl vorzugsweise nach dem Erstarren der Schweißnaht auf die Schweißnaht mit der Maßgabe gerichtet wird, dass lediglich ein Mittelabschnitt der Schweißnaht erneut aufgeschmolzen wird.

Schweißverfahren der vorstehend genannten Art sind aus der Praxis grundsätzlich bekannt. Dabei hat es sich bewährt, die aneinanderzufügenden Bereiche der miteinander zu verbindenden Bauteile aufzuschmelzen und danach die beiden Bauteile im Bereich der aufgeschmolzenen Bereiche unter Ausbildung einer Schweißnaht aneinanderzufügen. Insbesondere hat es sich bewährt, die aneinanderzufügenden Oberflächenbereiche der beiden Bauteile durch Bestrahlen mit einem Laser aufzuschmelzen. Es hat sich jedoch gezeigt, dass die mechanische Belastbarkeit der mit den aus der Praxis bekannten Schweißverfahren erzeugbaren Schweißnähte und deren Haltbarkeit verbesserungsbedürftig sind.
Der Erfindung liegt daher das technische Problem zugrunde, ein Schweißverfahren anzugeben, mit dem zwei Bauteile dauerhaft und mechanisch hochbelastbar aneinandergefügt werden können und das sich durch eine einfache und schnelle Ausführbarkeit auszeichnet.

Zur Lösung des technischen Problems lehrt die Erfindung ein Schweißverfahren gemäß Anspruch 1.

Mittelabschnitt der Schweißnaht meint insbesondere einen Abschnitt der Schweißnaht, welcher Abschnitt zwischen den beiden Bauteilen angeordnet ist, wenn die Bauteile nach der Beaufschlagung mit dem ersten Energiepuls aneinandergefügt bzw. miteinander verbunden sind. Es hat sich gezeigt, dass der Mittelabschnitt der Schweißnaht der Bereich der Schweißnaht ist, welcher Bereich am stärksten mechanisch belastet ist.
Bei den Bauteilen handelt es sich beispielsweise um Kraftstoffleitungen vorzugsweise eines Benzindirekteinspritzungssystems (GDI-System). Die Bauteile bestehen vorzugsweise aus dem gleichen Material, beispielsweise aus einem gemäß einer Ausführungsform rostfreien Stahl. Es ist möglich, dass die Bauteile jeweils aus einem Kunststoff gefertigt sind. Grundsätzlich ist es möglich, dass die beiden Bauteile aus verschiedenen Materialien, beispielsweise aus verschiedenen Stählen, gefertigt sind. Zweckmäßigerweise werden die miteinander zu verbindenden Bauteile vor der Ausbildung der Schweißnaht gegeneinander ausgerichtet. Dass die beiden Bauteile unter Ausbildung einer Schweißnaht aneinandergefügt bzw. miteinander verbunden werden, meint im Rahmen der Erfindung insbesondere, dass die beiden Bauteile stoffschlüssig miteinander verbunden werden.
Besonders bevorzugt werden mit lediglich einem ersten Energiepuls die miteinander zu verbindenden Bereiche der beiden Bauteile jeweils angewärmt (aufgewärmt) und teilweise aufgeschmolzen. Es ist möglich, dass die miteinander zu verbindenden Bereiche der beiden Bauteile jeweils mit einer Mehrzahl erster Energiepulse aufgewärmt und aufgeschmolzen werden. Bei den miteinander zu verbindenden Bereichen der beiden Bauteile handelt es sich zweckmäßigerweise jeweils um Bereiche einer Wandung der jeweiligen Bauteile, welche Bereiche der Wandungen empfohlenermaßen stoffschlüssig miteinander verbunden werden. Gemäß einer Ausführungsform ist die Energie des ersten und/oder weiteren Energiepulses über die Dauer des Energiepulses variierbar.

Gemäß einer Ausführungsform wird mit dem weiteren Energiepuls ein an eine Oberfläche der Schweißnaht grenzendes Volumensegment der Schweißnaht aufgeschmolzen. Zweckmäßigerweise ist das aufgeschmolzene Volumensegment als Ring ausgebildet und bildet einen Teil der Oberfläche der mit dem ersten Energiepuls aus den erwärmten und/oder aufgeschmolzenen Bereichen der beiden Bauteile gebildeten Schweißnaht. Es liegt im Rahmen der Erfindung, dass ausgehend von der Oberfläche des Volumensegments der Schweißnaht durch die erwärmten Bereiche jedes Bauteils ein Temperaturgradient in Richtung einer der Oberfläche abgewandten Rückseite des Bauteils ausgebildet wird, wobei eine Temperatur des Bauteils ausgehend von dem aufgeschmolzenen, oberflächenseitigen Volumensegment hin zu der Rückseite des Bauteils abnimmt.

Vorzugsweise wird der weitere Energiepuls nach dem Aneinanderfügen bzw. Verbinden der beiden Bauteile nach dem bevorzugt teilweisen Erstarren der erwärmten und/oder aufgeschmolzenen Bereiche der beiden Bauteile auf die Schweißnaht gerichtet. Es empfiehlt sich, dass das Volumensegment mit dem weiteren Energiepuls aufgeschmolzen wird, wenn ein insbesondere von dem Volumensegment vorzugsweise radial umgebener Abschnitt der Schweißnaht nach der Beaufschlagung durch den ersten Energiepuls noch nicht erstarrt ist. Auf diese Weise werden Risse geschlossen, die beispielsweise aufgrund der Abkühlung der Schweißnaht in der Schweißnaht aufreißen können und die Haltbarkeit der Schweißnaht beeinträchtigen. Grundsätzlich ist es möglich, dass nach dem Verbinden der beiden Bauteile und nach dem Erstarren der mit dem ersten Energiepuls aufgeschmolzenen Bereiche der beiden Bauteile eine Mehrzahl weiterer Energiepulse auf die Schweißnaht gerichtet wird. Besonders bevorzugt wird lediglich ein weiterer Energiepuls auf die Schweißnaht gerichtet.

Vorzugsweise werden der erste Energiepuls und/oder der weitere Energiepuls durch dieselbe Laserquelle erzeugt. Grundsätzlich ist es möglich, dass zur Erzeugung des ersten und/oder weiteren Energiepulses verschiedene Pulsquellen, insbesondere verschiedene Laserquellen eingesetzt werden.
Empfohlenermaßen ist eine Position der Energiepulsquelle, vorzugsweise der Laserquelle, beim Richten des ersten Energiepulses und/oder des weiteren Energiepulses auf die Bauteile unveränderlich bzw. invariant. Es ist möglich, dass die Energiequelle, vorzugsweise die Laserquelle, an eine Handhabungseinheit bzw. Steuereinheit angeschlossen ist, wobei die Position und/oder Ausrichtung der Energiepulsquelle, vorzugsweise der Laserquelle, bei der Bestrahlung der Bauteile mit dem ersten Energiepuls und/oder dem weiteren Energiepuls nicht verändert wird bzw. unverändert ist.

Gemäß der Erfindung wird der weitere Energiepuls 20 bis 200 ms nach dem ersten Energiepuls auf die Bauteile gerichtet. Gemäß einer bevorzugten Ausführungsform wird der weitere Energiepuls 40 bis 120 ms nach dem ersten Energiepuls auf die Bauteile gerichtet. Es ist möglich, dass der weitere Energiepuls 50 bis 100 ms nach dem ersten Energiepuls auf die Bauteile gerichtet wird. Es liegt im Rahmen der Erfindung, dass der weitere Energiepuls nach dem insbesondere vollständigen Erkalten und/oder Erstarren auf den Mittelabschnitt der Schweißnaht gerichtet wird.

Gemäß einer bevorzugten Ausführungsform ist die Energie des weiteren Energiepulses geringer als die Energie des ersten Energiepulses. Auf diese Weise wird sichergestellt, dass lediglich der Mittelabschnitt der Schweißnaht durch den weiteren Energiepuls erneut aufgeschmolzen wird, ohne dass Wandungsbereiche bzw. die Wandungen der beiden Bauteile erneut aufgeschmolzen werden. Durch die Bestrahlung des Mittelabschnitts der Schweißnaht mit dem weiteren Energiepuls können Risse in der Schweißnaht zuverlässig geschlossen werden, ohne dass eine Schwächung der Schweißnaht zu befürchten ist.

Zweckmäßigerweise ist der Durchmesser des weiteren Energiepulses kleiner als der Durchmesser des ersten Energiepulses. Besonders bevorzugt ist die Bestrahlung des Mittelabschnitts der Schweißnaht mit dem weiteren Energiepuls auf den Mittelabschnitt der Schweißnaht fokussiert, um insbesondere eine Erwärmung der schweißnahtseitigen Wandungsbereiche der Bauteile auszuschließen bzw. zu minimieren.

Es ist möglich, dass die Schweißnaht ohne eine zusätzliche Schweißmittelzugabe erzeugt wird. Grundsätzlich ist es möglich, dass die Schweißnaht unter Zuführen eines Schweißmittels gebildet wird. Das Schweißmittel besteht bevorzugt aus demselben Material wie die Wandungen der Bauteile.

Der Erfindung liegt die Erkenntnis zugrunde, dass mit dem erfindungsgemäßen Verfahren zwei Bauteile dauerhaft und mechanisch beständig miteinander verbunden werden können. Mit dem erfindungsgemäßen Verfahren können in vorteilhafter Weise Rissbildungen in der Schweißnaht verhindert werden, welche Rissbildungen bei den aus der Praxis bekannten Verfahren beim Abkühlen der Schweißnaht unmittelbar nach deren Erzeugung entstehen. Das erfindungsgemäße Verfahren zeichnet sich dabei durch eine einfache Ausführbarkeit und hohe Funktionssicherheit aus, wodurch dem Schweißvorgang nachgelagerte Überprüfungen der Schweißnaht sehr einfach sind und gegebenenfalls sogar weggelassen werden können. Insofern zeichnet sich das erfindungsgemäße Verfahren durch eine hohe Betriebssicherheit und Wirtschaftlichkeit aus. In vorteilhafter Weise ist das erfindungsgemäße Verfahren schnell ausführbar, so dass mit dem erfindungsgemäßen Verfahren eine Vielzahl von Schweißvorgängen in einer überraschend kurzen Zeit funktionssicher ausführbar ist.

Nachfolgend wird die Erfindung anhand einer lediglich ein Ausführungsbeispiel darstellenden Zeichnung genauer erläutert. Es zeigen schematisch
- Fig. 1: eine Draufsicht auf eine Schweißnaht gemäß dem Stand der Technik,
- Fig. 2: eine Draufsicht auf eine mit dem erfindungsgemäßen Verfahren erzeugte Schweißnaht,
- Fig. 3: einen Schnitt durch eine mit dem erfindungsgemäßen Verfahren erzeugte Schweißnaht nach der Bestrahlung mit dem ersten Energiepuls und
- Fig. 4: einen Schnitt durch eine mit dem erfindungsgemäßen Verfahren erzeugte Schweißnaht nach der Bestrahlung mit dem weiteren Energiepuls.

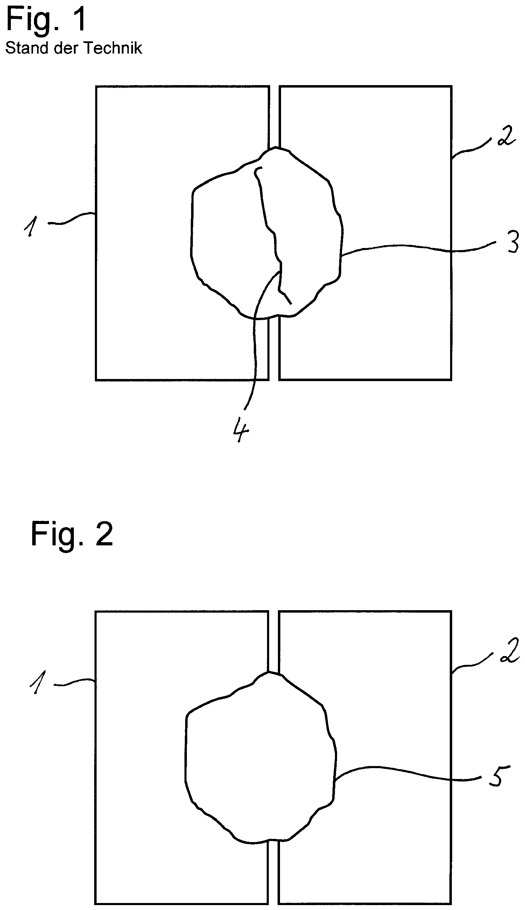

In Fig. 1 sind zwei Bauteile 1, 2 dargestellt, die mit einer Schweißnaht 3 gemäß den aus dem Stand der Technik bekannten Schweißverfahren aneinandergefügt sind. Es ist erkennbar, dass die Schweißnaht 3 einen Riss 4 aufweist, durch welchen Riss 4 die Schweißnaht 3 derart geschwächt ist, dass die Bauteile 1, 2 nicht zuverlässig mit einander verbunden sind.

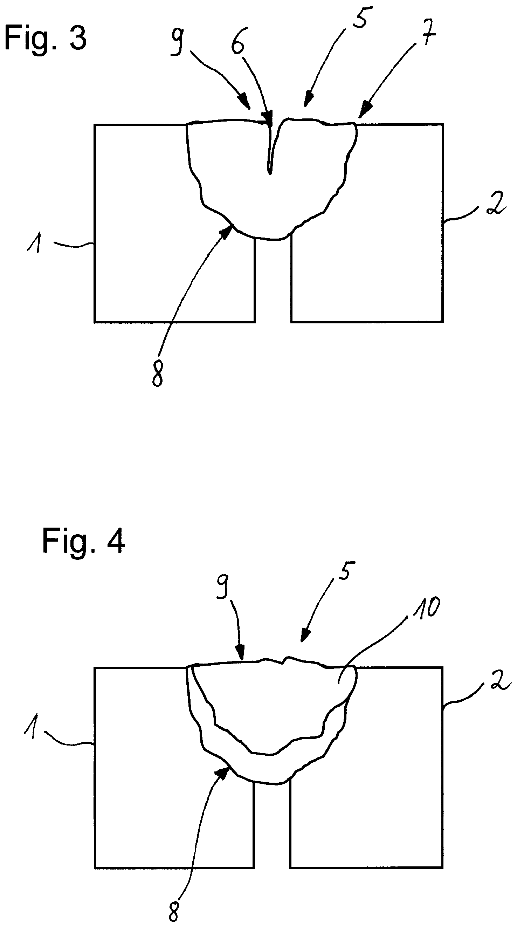

Mit dem erfindungsgemäßen Verfahren lassen sich Schweißnähte 5 erzeugen, welche Schweißnähte 5 rissfrei ausgebildet sind und die beiden Bauteile 1, 2 gemäß der Fig. 2 zuverlässig aneinanderfügen. Durch einen ersten Laserpuls wird gemäß dem Ausführungsbeispiel und wie in der Fig. 3 gezeigt ein an eine Oberfläche 7 des Bauteils 1 grenzender Bereich 8 erwärmt und aufgeschmolzen. Daraufhin wird das Bauteil 1 mit dem in den Fig. 3 und 4 dargestellten, einen ebenfalls erwärmten und aufgeschmolzenen Bereich 8 aufweisenden Bauteil 2 unter Ausbildung der Schweißnaht 5 verbunden. Die Schweißnaht 5 wird gemäß den Ausführungsbeispiel durch ein Wandungsmaterial bzw. Material der Bauteile 1, 2 in den aufgeschmolzenen Bereichen 8 gebildet.

Es hat sich gezeigt, dass ein Mittelabschnitt 9 der Schweißnaht 5 bedingt durch das Erstarren des die Schweißnaht 5 bildenden Materials unter einer besonderen Spannung steht und infolge des Erstarrens des Materials des Mittelabschnitts 9 Risse 6 ausgebildet werden können, was in Fig. 3 gezeigt ist. Durch ein Bestrahlen des Mittelabschnitts 9 mit einem weiteren Laserpuls werden nach dem Erstarren des Mittelabschnitts 9 ausgebildete Risse 6 geschlossen, indem ein Volumensegmente 10 des Mittelabschnitt 9 erneut aufgeschmolzen wird. Dadurch wird eine Schweißnaht 5 gemäß Fig. 4 als rissfreie Schweißnaht 5 ausgebildet. Gemäß dem Ausführungsbeispiel weist der weitere Laserpuls eine geringere Energie als der erste Laserpuls auf.

## Patentansprüche

1. Schweißverfahren, insbesondere Heftschweißverfahren, zum Verbinden zweier Bauteile (1, 2), vorzugsweise zweier Bauteile eines Kraftstoffsystems,
wobei die miteinander zu verbindenden Bereiche der beiden Bauteile (1, 2) mit zumindest einem ersten Energiepuls jeweils erwärmt und jeweils teilweise aufgeschmolzen werden,
wobei die teilweise aufgeschmolzenen Bereiche (8) der beiden Bauteile (1, 2) unter Ausbildung einer Schweißnaht (5) miteinander verbunden werden und
wobei ein weiterer Energiepuls vorzugsweise nach dem Erstarren der Schweißnaht (5) auf die Schweißnaht (5) mit der Maßgabe gerichtet wird, dass lediglich ein Mittelabschnitt (9) der Schweißnaht (5) erneut aufgeschmolzen wird,
wobei der weitere Energiepuls 20 bis 200 ms nach dem ersten Energiepuls auf die Bauteile (1, 2) gerichtet wird und
wobei der erste und der zweite Energiepuls ein Laserpuls ist.

2. Verfahren nach Anspruch 1, wobei mit dem weiteren Energiepuls ein an eine Oberfläche (7) der Schweißnaht grenzendes Volumensegment (10) aufgeschmolzen wird.

3. Verfahren nach einem der Ansprüche 1 oder 2, wobei der weitere Energieimpuls nach dem Aneinanderfügen der beiden Bauteile (1, 2) und nach dem bevorzugt teilweisen Erstarren der mit dem ersten Energiepuls erwärmten und/oder aufgeschmolzenen Bereiche (8) auf die Schweißnaht (5) gerichtet wird.

4. Verfahren nach einem der Ansprüche 1 bis 3, wobei der erste Energiepuls und/oder weitere Energiepuls durch dieselbe Energiequelle, vorzugsweise Laserquelle erzeugt werden.

5. Verfahren nach einem der Ansprüche 1 bis 4, wobei eine Position der Energiequelle, vorzugsweise der Laserquelle beim Richten des ersten Energiepulses und/oder des weiteren Energiepulses auf die beiden Bauteile (1, 2) unveränderlich bzw. invariant ist.

6. Verfahren nach einem der Ansprüche 1 bis 5, wobei die Energie des weiteren Energiepulses geringer ist als die Energie des ersten Energiepulses.

7. Verfahren nach einem der Ansprüche 1 bis 6, wobei der Durchmesser des weiteren Energiepulses kleiner als der Durchmesser des ersten Energiepulses ist.

8. Verfahren nach einem der Ansprüche 1 bis 7, wobei die Schweißnaht (5) ohne eine zusätzliche Schweißmittelzugabe erzeugt wird.

9. Verfahren nach einem der Ansprüche 1 bis 7, wobei die Schweißnaht (5) unter Zuführung eines Schweißmittels gebildet wird.

## Claims

1. A welding method, in particular a tack welding method, for joining two components (1, 2), preferably two components of a fuel system,
wherein the areas of the two components (1, 2) to be joined together are each heated and each partially melted with at least a first energy pulse,
wherein the partially melted areas (8) of the two components (1, 2) are joined together with the formation of a welded seam (5), and
wherein an additional energy pulse is directed at the welded seam (5) preferably after the welded seam (5) has solidified, subject to the condition that only a central section (9) of the welded seam (5) is again melted,
wherein the additional energy pulse is directed at the components (1, 2) 20 to 200 ms after the first energy pulse, and
wherein the first and second energy pulse is a laser pulse.

2. The method according to claim 1, wherein the additional energy pulse is used to melt a volume segment (10) adjoining a surface (7) of the welded seam.

3. The method according to one of claims 1 or 2, wherein the additional energy pulse is directed at the welded seam (5) after the two components (1, 2) have been joined together and after the preferably partial solidification of the areas (8) heated and/or melted with the first energy pulse.

4. The method according to one of claims 1 to 3, wherein the first energy pulse and/or the additional energy pulse is generated by the same energy source, preferably a laser source.

5. The method according to one of claims 1 to 4, wherein a position of the energy source, preferably the laser source, is unchanging or invariant when directing the first energy pulse and/or the additional energy pulse at the two components (1, 2).

6. The method according to one of claims 1 to 5, wherein the energy of the additional energy pulse is lower than the energy of the first energy pulse.

7. The method according to one of claims 1 to 6, wherein the diameter of the additional energy pulse is smaller than the diameter of the first energy pulse.

8. The method according to one of claims 1 to 7, wherein the welded seam (5) is generated without adding another welding means.

9. The method according to one of claims 1 to 7, wherein the welded seam (5) is formed by adding a welding means.

## Revendications

1. Procédé de soudage, notamment procédé de pointage, destiné à assembler deux éléments constitutifs (1, 2) d'un système de carburant,
lors duquel on chauffe respectivement et on fait fondre respectivement en partie les zones que l'on doit assembler l'une à l'autre des deux éléments constitutifs (1, 2) avec au moins une première impulsion d'énergie,
lors duquel on assemble l'une à l'autre les zones (8) partiellement fondues des deux éléments constitutifs (1, 2) en créant un joint de soudure (5) et
lors duquel on dirige sur le joint de soudure (5) une impulsion d'énergie supplémentaire, de préférence après solidification du joint de soudure (5) avec la consigne de ne faire refondre que seul un segment médian (9) du joint de soudure (5),
lors duquel on dirige l'impulsion d'énergie supplémentaire 20 à 200 ms après la première impulsion d'énergie sur les éléments constitutifs (1, 2) et
la première et la deuxième impulsion d'énergie étant une impulsion laser.

2. Procédé selon la revendication 1, lors duquel avec l'impulsion d'énergie supplémentaire, on fait fondre un segment volumique (10) jouxtant une surface (7) du joint de soudure.

3. Procédé selon l'une quelconque des revendications 1 ou 2, après l'assemblage des deux éléments constitutifs (1, 2) et après la solidification de préférence partielle des zones (8) chauffées et/ou fondues avec la première impulsion d'énergie, on dirige l'impulsion d'énergie supplémentaire sur le joint de soudure (5).

4. Procédé selon l'une quelconque des revendications 1 à 3, lors duquel on crée la première impulsion d'énergie et/ou l'impulsion d'énergie supplémentaire à l'aide de la même source d'énergie, de préférence une source laser.

5. Procédé selon l'une quelconque des revendications 1 à 4, lors de la direction de la première impulsion d'énergie et/ou de l'impulsion d'énergie supplémentaire sur les deux éléments constitutifs (1, 2) une position de la source d'énergie étant immuable voire invariable.

6. Procédé selon l'une quelconque des revendications 1 à 5, l'énergie de l'impulsion d'énergie supplémentaire étant plus faible que l'énergie de la première impulsion d'énergie.

7. Procédé selon l'une quelconque des revendications 1 à 6, le diamètre de l'impulsion d'énergie supplémentaire étant inférieur au diamètre de la première impulsion d'énergie.

8. Procédé selon l'une quelconque des revendications 1 à 7, lors duquel on créé le joint de soudure (5) sans ajouter un agent de soudage additionnel.

9. Procédé selon l'une quelconque des revendications 1 à 7, lors duquel on créé le joint de soudure (5) sous apport d'un agent de soudage.
